# EUROPÄISCHE PATENTSCHRIFT

(11) **EP 1 679 919 B1**
(45) Veröffentlichungstag und Bekanntmachung des Hinweises auf die Patenterteilung: **30.01.2008**
(21) Anmeldenummer: 05000141.1
(22) Anmeldetag: 05.01.2005
(51) Int. Cl.: H04Q 7/34

(54) **Verfahren und Vorrichtung zum Monitoren einer zwischen einem ersten und einem zweiten Knoten eines Übertragungssystems angeordneten Schnittstelle**
Method and apparatus for monitoring an interface arranged between a first and a second node of a transmission system
Procédé et dispositif pour surveiller l'interface entre un premier et un second noeud dans un système de transmission

(43) Veröffentlichungstag der Anmeldung: 12.07.2006
(73) Patentinhaber: Tektronix International Sales GmbH, 8212 Neuhausen (CH)
(72) Erfinder: Villwock, Christian, 14979 Grossbeeren (DE); Richard, Patrice, 10439 Berlin (DE); Pille, Peter, 10247 Berlin (DE)
(74) Vertreter: Schurack, Eduard F.

(56) Entgegenhaltungen:
- US-A- 5 715 245
- US-A1- 2003 100 299

## Beschreibung

Die vorliegende Erfindung betrifft ein Verfahren zum Monitoren einer zwischen einem ersten und einem zweiten Knoten eines Übertragungssystems angeordneten Schnittstelle, wobei die Schnittstelle mit mindestens einer zwischen dem ersten und dem zweiten Knoten angeordneten Übertragungsstrecke verbunden ist, wobei auf der mindestens einen Übertragungsstrecke mehrere Übertragungskanäle eingerichtet sind, wobei auf mindestens einem der Übertragungskanäle Benutzerebenendaten übertragen werden, und wobei über mindestens einen der Übertragungskanäle Steuerungsebenendaten übertragen werden, die mindestens einen Parameter umfassen, der mindestens einem Übertragungskanal, auf dem Benutzerebenendaten übertragen werden, zugeordnet ist, und dieser Übertragungskanal bekannt ist. Sie betrifft überdies eine entsprechende Vorrichtung zum Monitoren einer zwischen einem ersten und einem zweiten Knoten eines Übertragungssystems angeordneten Schnittstelle.

Die vorliegende Erfindung findet insbesondere Anwendung im Bereich von Mobilfunknetzen. Gemäß einem früheren Netzstandard, der unter der Bezeichnung GSM bekannt ist, wurde von einem Teilnehmer eine Funkfrequenz belegt, die nur diesem Teilnehmer zugewiesen war. Diese Frequenz wurde von dem Teilnehmer solange belegt, wie er seine Verbindung aufrechterhalten hat, egal ob Sprechpausen vorgekommen sind und abhängig von den von ihm eingekauften Leistungen und Diensten, die von dem zugehörigen Provider angeboten werden. Da es sich bei Funkfrequenzen um eine Ressource handelt, die knapp ist und sich nicht beliebig vervielfältigen lässt, wurde dieser Zustand als verbesserungswürdig angesehen. Nach diesem System der sogenannten zweiten Generation folgte ein System der 2.5. Generation, das sogenannte GPRS, als Vertreter der dritten Generation schließt sich das EDGE-Netz an. Über die beiden letztgenannten Generationen sind eine vielfache Anzahl von Teilnehmern verglichen mit dem GSM-Netz bedienbar, die zur Verfügung stehenden Kanäle werden effizienter verteilt, beispielsweise wird bei geringerer Sprachaktivität eine geringere Kapazität beansprucht. Überdies lässt sich die Kapazität in Abhängigkeit der eingekauften Leistungen und Dienste variieren.

In diesem Zusammenhang sei auf die US 5,715,245 verwiesen, die ein Datenübertragungsverfahren für den GSM-Standard offenbart, das eine flexible Zuweisung von Übertragungskapazitäten an Base Transceiver Stations erlaubt. In einem Mobilfunksystem sind ein Base Station Controller und mehrere Base Transceiver Stations mittels Übertragungsstrecken in Reihe geschaltet. Über diese Übertragungsstrecken werden Daten in in Zeitschlitze unterteilten Rahmen übertragen. Zur Steuerung des Datenübertragungsnetzes, das durch die Übertragungsstrecken gebildet wird, werden Konfigurationsdaten, die angeben, in welchen Zeitschlitzen die für die einzelnen Base Transceiver Stations gedachten Daten untergebracht sind, in vorbestimmten Zeitschlitzen zu den Base Transceiver Stations übertragen.

Ferner sei noch auf die US 2003/0100299 A1 verwiesen, die ein Verfahren zum Testen eines digitalen Mobilfunknetzes, beispielsweise eines GPRS- oder eines 3G-Netzes, offenbart, bei dem mittels eines mit einem Computer verbundenen Test-Mobiltelefons ein Test-Verkehr erzeugt wird und der Computer zum Messen eines mit der Antwort des Netzes auf den Test-Verkehr in Verbindung stehenden Parameters verwendet wird. Die durch den Computer vorgenommenen Messungen werden in den Test-Verkehr codiert, um einen Datenstrom innerhalb des Mobilfunk-Netzes zu erzeugen, der den Test-Verkehr, Messungen in Bezug auf den Test-Verkehr und Signalisierung in Bezug auf den Test-Verkehr enthält, wobei dieser Datenstrom an einzelnen Stellen innerhalb des Netzes empfangen und analysiert werden kann, um das Funktionieren des Netzes dynamisch erforschen zu können, während das Netz mit dem Test-Verkehr erprobt wird.

Wenngleich die vorliegende Erfindung der besseren Verständlichkeit wegen am Beispiel der Abis-Schnittstelle beschrieben werden wird, die in den genannten Standards, d.h. in einer GSM- oder in einer GPRS- oder in einer EDGE-Umgebung, eine Base Transceiver Station (BTS) mit einem Base Station Controller (BSC) verbindet, so lässt sich die Erfindung selbstverständlich auch bei Netzen eines anderen Standards, insbesondere Mobilfunknetzen zukünftiger Standards anwenden, sofern sie dem obigen Gattungsbegriff genügen.

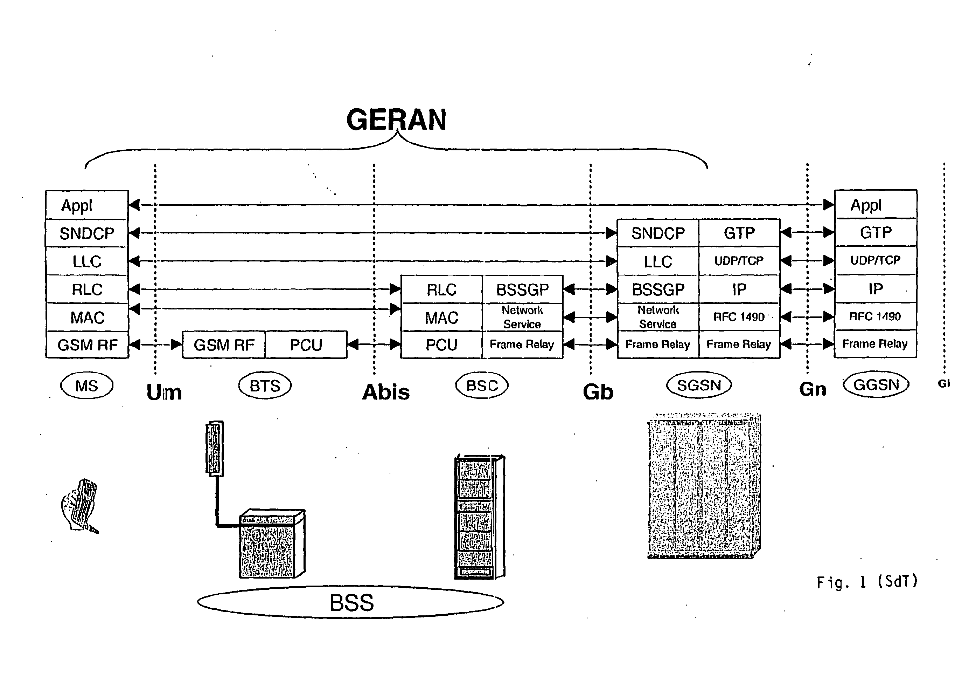

Zur Beschreibung der der Erfindung zugrunde liegenden Problematik wird zunächst auf Figur 1 Bezug genommen. Figur 1 zeigt zunächst fünf Knoten eines Mobilfunknetzes, nämlich den GGSN (Gateway GPRS Support Node), SGSN (Serving GPRS Support Node), BSC (Base Station Controller), BTS (Base Transceiver Station) und MS (Mobil System). Zwischen diesen Knoten sind verschiedene Schnittstellen angeordnet: zwischen dem MS und dem BTS die Um-Schnittstelle, zwischen dem BTS und dem BSC die Abis-Schnittstelle, zwischen dem BSC und dem SGSN die Gb-Schnittstelle, zwischen dem SGSN und dem GGSN die Gn-Schnittstelle und zwischen dem GGSN und dem MSC (nicht dargestellt) die Gi-Schnittstelle. Die Knoten und Schnittstellen zwischen dem MS und dem SGSN werden als GERAN (GSM EDGE Radio Access Network) bezeichnet, und zwar sowohl für Mobilfunknetze mit GSM-, GPRS- als auch EDGE-Technologie. BSC, Abis-Schnittstelle und BTS sind in ein BSS (Base Station Sub-System) zusammengefasst, wobei darin ein BSC eine Vielzahl von BTS bedienen kann. Sogenannte BSS werden von Herstellern als Einheit verkauft, wodurch die Abis-Schnittstelle proprietär, d. h. herstellerspezifisch und nicht genormt, ausgebildet ist. Im Gegensatz hierzu sind die Um- und die Gb-Schnittstelle genormt. Innerhalb eines BSS sind in der Regel die jeweiligen BTS kostensensitiv ausgebildet, d. h. sie verfügen nur über eine begrenzte "Intelligenz". Diese sitzt im jeweiligen BSC. Ein Monitoring der A-bis-Schnittstelle ist gewünscht, da dort viele für die Luftschnittstelle (Um) relevante Parameter übertragen werden. Auf der Gb-Schnittstelle ist ein Monitoring dieser Parameter nicht möglich, da diese dort nicht mehr vorhanden sind. Mit Bezug auf Figur 1 trifft dies beispielsweise für den Parameter PCU (Packet Control Unit), der für die Nutzdatenübertragung genutzt wird, zu. Die physikalische Verbindung zwischen einem BTS und einem BSC ist in der Praxis realisiert durch mehrere PCM (Puls Code Modulation)-Verbindungen, insbesondere 1 bis 4 E1/T1-Leitungen. Jede dieser Leitungen besteht aus 32 (E1)- oder 24 (T1)-Kanälen. Jeder Übertragungskanal überträgt Daten mit einer Rate von 64 kbit/s. Die Kanäle können in Subkanäle mit Datenraten von 8 kbit/s, 16 kbit/s oder 32 kbit/s unterteilt sein.

Zur Klarstellung der zur Beschreibung der vorliegenden Erfindung gewählten Begriffe: Der Begriff "Übertragungsstrecke" bedeutet im Sinne der vorliegenden Erfindung die physikalische Verbindung zwischen dem ersten und dem zweiten Knoten. "Übertragungskanal" betrifft die Unterteilung der Übertragung auf einer Übertragungsstrecke in zusammengehörige Datenblöcke. Eine Benutzerebenenverbindung kann einen oder mehrere Übertragungskanäle umfassen, wobei auch die Übertragung in Subübertragungskanälen möglich ist, d. h. verschiedene Benutzer können sich einen Übertragungskanal teilen. Im Nachfolgenden umfasst der der leichteren Verständlichkeit halber einheitlich verwendete Begriff "Übertragungskanal" auch mehrere Übertragungskanäle sowie "Subübertragungskanäle". Ein Parameter enthält Informationen zu übertragungsrelevanten Informationen einen Übertragungskanal betreffend. Dieser kann in einem einzigen Parameter, beispielsweise einem Index, zusammengefasst sein, er kann sich jedoch auch aus mehreren Einzelparametern zusammensetzen, die diese Information enthalten.

Ein Übertragungskanal zwischen BTS und BSC dient der Übertragung von Steuerungsebenendaten. Die Position dieses Übertragungskanals muss für das Monitoring bekannt sein. Zur Ermittlung der Position dieses Übertragungskanals kann beispielsweise das Verfahren Anwendung finden, das die Anmelderin der vorliegenden Anmeldung in der europäischen Patentanmeldung mit der Veröffentlichungs nummer EP 1 505 845 mit dem Titel "Verfahren und Vorrichtung zum Ermitteln mindestens eines Übertragungsparameters in einem Übertragungssystem" beschrieben hat. Steuerungsebenendaten werden zum Einrichten und Beenden, d. h. zum Aktivieren und Deaktivieren einer Benutzerebenenverbindung (Sprache oder Daten) auf dem Übertragungskanal für Steuerungsebenendaten übertragen, die Information über den Übertragungskanal für Benutzerebenendaten enthalten. Wie bereits erwähnt, ist diese Information, die die Benutzerebenenverbindung betrifft, herstellerspezifisch. Einige Hersteller verwenden beispielsweise Indizes, um Übertragungskanäle für Benutzerebenendaten zu spezifizieren. Andere geben explizit den Übertragungskanal, den Subübertragungskanal und die Bandbreite an. Der Zusammenhang zwischen diesen Parametern einerseits und den Übertragungskanälen für eine Benutzerebenenverbindung andererseits sind innerhalb des BSC als Zuordnungstabelle abgespeichert. Diese Zuordnungstabelle wird vom BSC an einen BTS nur ein einziges Mal übertragen und zwar während der Initialisierungsphase des BTS.

Für das Monitoren oder Analysieren von Benutzerebenenverbindungen benötigt ein Protokollmonitor, der an alle physikalischen Verbindungen zwischen BSC und BTS angeschlossen ist, die Information, die in der Zuordnungstabelle enthalten ist. Da es normalerweise unmöglich ist, einen Reset am BTS durchzuführen, um die Neuübertragung des Inhalts der Zuordnungstabelle auszulösen, besteht die bisherige Lösung darin, den Inhalt der Zuordnungstabelle manuell in den Protokollmonitor zu übertragen.

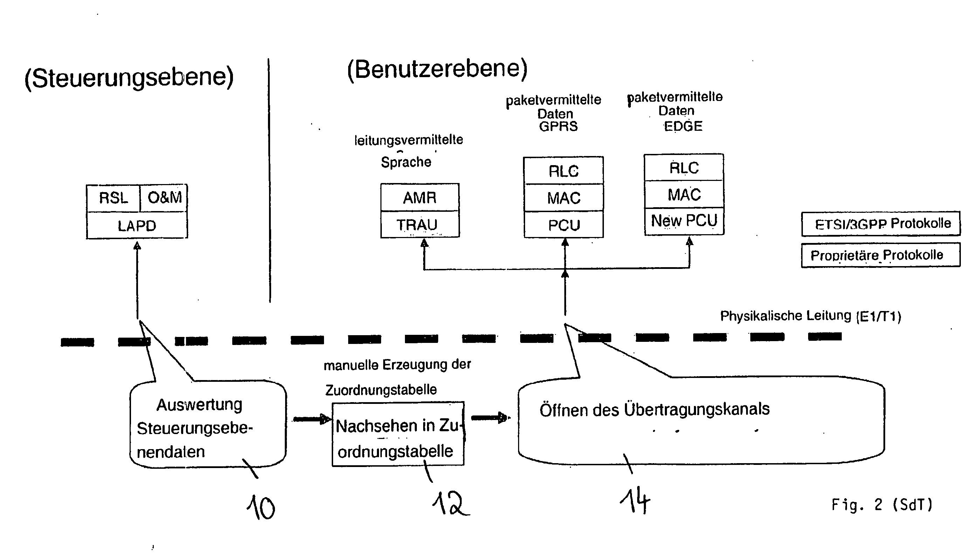

Figur 2 zeigt den soeben beschriebenen Zusammenhang, wonach über mindestens eine physikalische Verbindung Steuerungsebenendaten (Control Plane) und Benutzerebenendaten (User Plane) übertragen werden. Die Steuerungsebenendaten umfassen insbesondere Daten zum Aufbau einer Verbindung zur Übertragung von Benutzerebenendaten sowie zur Steuerung der Datenübertragung. Die auf der Benutzerebene übertragenen Daten können insbesondere leitungsvermittelte Sprache (Circuit Switched Speech) oder paketvermittelte Daten (Packet Switched) nach dem GPRS- und EDGE-Standard sein. Im Block 10 werden die Steuerungsebenendaten ausgewertet, um den mindestens einen Parameter, der mindestens einem Übertragungskanal zugeordnet ist, zu ermitteln. Mit diesem Parameter findet man über die Zuordnungstabelle 12 Informationen, die dem Protokollmonitor das Öffnen des mindestens einen Übertragungskanals, auf dem Benutzerebenendaten übertragen werden, siehe Block 14, ermöglichen. Die aus dem Stand der Technik bekannte Vorgehensweise leidet jedoch unter dem Nachteil, dass für die manuelle Übertragung der Zuordnungstabelle an den Protokollmonitor Expertenwissen nötig ist, das typischerweise bei einem Techniker, der einen Protokollmonitor installiert, nicht vorhanden ist. Die gegenwärtig mit dieser Aufgabe betreuten Experten sind daher hochqualifizierte Fachkräfte und ihr Einsatz geht daher mit hohen Kosten einher.

Die Aufgabe der vorliegenden Erfindung besteht deshalb darin, das eingangs genannte Verfahren derart weiterzubilden, dass die Installation eines Protokollmonitors durch eine Person mit weniger Expertenwissen vorgenommen werden kann. Die Aufgabe besteht ferner darin, eine entsprechende Vorrichtung zur Verfügung zu stellen.

Diese Aufgaben werden gelöst durch ein Verfahren mit den Merkmalen von Patentanspruch 1 sowie durch eine Vorrichtung mit den Merkmalen von Patentanspruch 10.

Die vorliegende Erfindung basiert auf der Erkenntnis, dass die obigen Aufgaben gelöst werden können, wenn die auf dem Übertragungskanal für Steuerungsebenendaten übertragenen Steuerungsebenendaten ausgewertet werden und in geschickte Relation gesetzt werden zu Vorgängen auf Übertragungskanälen für Benutzerebenendaten. Die Erfindung beruht insbesondere darauf, die Steuerungsebenendaten auszuwerten, um festzustellen, dass eine Benutzerebenenverbindung, die mindestens einen Übertragungskanal für Benutzerebenendaten umfasst, aktiviert werden soll, wobei der zugehörige mindestens eine Parameter ermittelt wird. Anschließend wird festgestellt, welcher mindestens eine Übertragungskanal für Benutzerebenendaten innerhalb eines vorgebbaren Zeitraums, beispielsweise 20 ms, seinen Zustand von inaktiv in aktiv gewechselt hat. Schließlich wird die Zuordnung des mindestens einen Parameters zu dem mindestens einen Übertragungskanal für Benutzerebenendaten ermittelt.

Wenn nur ein einziger Übertragungskanal seinen Zustand innerhalb des vorgegebenen Zeitrahmens von inaktiv nach aktiv ändert, weiß der Protokollmonitor von diesem Zeitpunkt an den Zusammenhang zwischen dem jeweiligen Übertragungskanal für Benutzerebenendaten und dem mindestens einen Parameter, beispielsweise dem oben bezeichneten Index. Wechseln jedoch mehrere Übertragungskanäle innerhalb des vorgebbaren Zeitrahmens ihren Zustand von inaktiv nach aktiv, kann keine endgültige Entscheidung getroffen werden. Eine bevorzugte Weiterbildung zeichnet sich deshalb dadurch aus, dass die Steuerungsebenendaten ausgewertet werden um festzustellen, dass eine Benutzerebenenverbindung deaktiviert werden soll. Anschließend wird festgestellt, welcher mindestens eine Übertragungskanal der Übertragungskanäle, die innerhalb des vorgebbaren Zeitraums ihren Zustand von inaktiv in aktiv gewechselt hatten, innerhalb eines vorgebbaren Zeitraums seinen Zustand von aktiv in inaktiv gewechselt hat. Schließlich wird die Zuordnung des mindestens einen Parameters zu dem mindestens einen Übertragungskanal ermittelt, der innerhalb des vorgebbaren Zeitraums seinen Zustand von aktiv in inaktiv gewechselt hat.

Eine bevorzugte Ausführungsform zeichnet sich dadurch aus, dass der mindestens eine Parameter und der mindestens eine Übertragungskanal in eine Zuordnungstabelle, insbesondere in einer Speichervorrichtung, eingetragen werden. Dadurch wird die Möglichkeit geschaffen, dass der Protokollmonitor durch einfaches Überwachen aller Aktivitäten auf den Übertragungsstrecken zwischen einem BTS und einem BSC den gesamten Inhalt der Zuordnungstabelle "lernt". Besonders effektiv ist dieser Lernvorgang, wenn nach Durchführung von Schritt a) geprüft wird, ob der Parameter bereits in der Zuordnungstabelle eingetragen ist und die weiteren Schritte des erfindungsgemäßen Verfahrens nur für die Parameter ausgeführt werden, die noch nicht in der Zuordnungstabelle erfasst sind.

Bevorzugt umfasst der mindestens eine Parameter eine Auswahl der folgenden Information: Lage des Übertragungskanals, Bandbreite, Lage des Subübertragungskanals.

Da in dem mindestens einen Parameter, wie erwähnt, mehrere Einzelinformationen zusammengefasst sein können, beispielsweise kodiert in einem Index, oder der mindestens eine Parameter mehrere Einzelparameter umfassen kann, die die entsprechende für die Übertragung der Benutzerebenendaten relevante Information enthalten, ist es von großem Vorteil, wenn der grundsätzliche proprietäre Aufbau des mindestens einen Parameters bekannt ist.

Da die Übertragung auch beispielsweise in mehreren Subübertragungskanälen stattfinden kann, die einer Benutzerebenenverbindung zugeordnet sind, jedoch in unterschiedlichen Übertragungskanälen liegen können, ist es von Vorteil, wenn vor der Durchführung von Schritt b) die Daten, die auf der mindestens einen Übertragungsstrecke übertragen werden, in Übertragungskanäle mit der kleinsten, zwischen dem ersten und dem zweiten Knoten zur Übertragung verwendeten Bandbreite aufgeteilt werden.

Soweit anwendbar gelten die im Zusammenhang mit dem erfindungsgemäßen Verfahren genannten Vorteile auch für die erfindungsgemäße Vorrichtung.

Im Nachfolgenden wird nunmehr ein Ausführungsbeispiel der vorliegenden Erfindung unter Bezugnahme auf die beigefügten Zeichnungen näher beschrieben. Es zeigen:
- Figur 1: einen Ausschnitt mit mehreren Knoten und mehreren Schnittstellen eines Mobilfunknetzwerks in einer GSM/GPRS/EDGE-Umgebung, wie sie aus dem Stand der Technik bekannt ist;
- Figur 2: in schematischer Darstellung die Vorgehensweise zum Monitoren eines Übertragungskanals, auf dem Benutzerebenendaten übertragen werden, wie sie aus dem Stand der Technik bekannt ist;
- Figur 3: in schematischer Darstellung die Vorgehensweise zum Monitoren eines Übertragungskanals, auf dem Benutzerebenendaten übertragen werden gemäß dem erfindungsgemäßen Verfahren;
- Figur 4: in schematischer Darstellung eine einzelne Übertragungsstrecke mit ihren Zeitschlitzen, d. h. mit ihren Übertragungskanälen und Subübertragungskanälen;
- Figur 5: in schematischer Darstellung die zeitliche Abfolge die Schritte bei der Aktivierung und der Deaktivierung einer Benutzerebenenverbindung; und
- Figur 6: ein Blockschaltdiagramm betreffend eine bevorzugte Ausführungsform des erfindungsgemäßen Verfahrens.

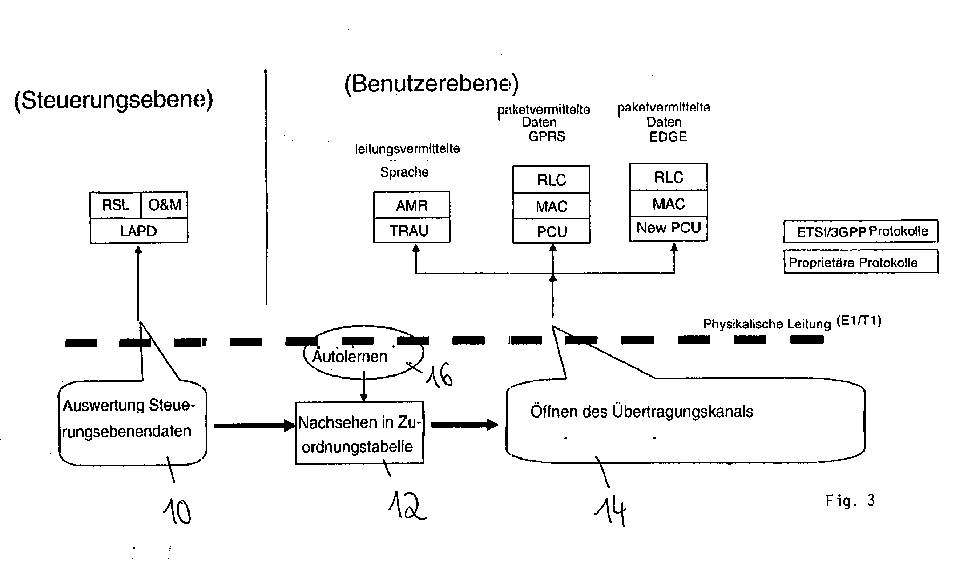

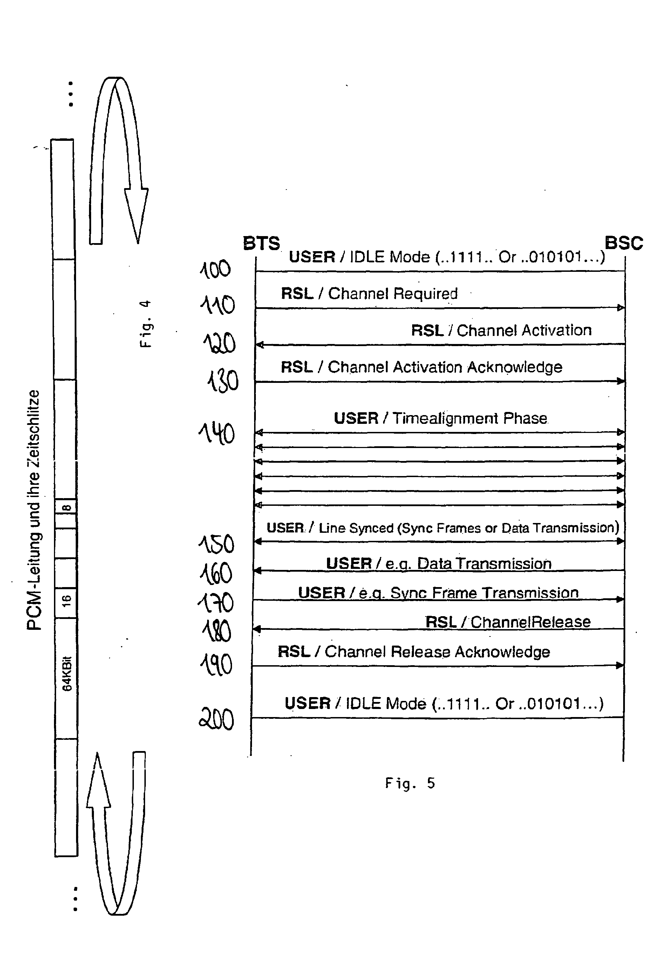

Ein Vergleich der Figuren 2 und 3 macht deutlich, an welcher Stelle das erfindungsgemäße Verfahren eingreift: Die Zuordnungstabelle 12 wird beim erfindungsgemäßen Verfahren durch einen "Autolearning"-Prozess 16 erzeugt. Wie bereits erwähnt, können zwischen einer BTS und einem BSC zwischen einer und vier PCM-Übertragungsstrecken, sogenannte E1- oder T1-Leitungen vorhanden sein. Ein Übertragungskanal hat beispielsweise eine Bandbreite von 64 kbit/s, es ist jedoch auch eine Unterteilung in Subübertragungskanäle mit einer Datenrate von 32 kbit/s, 16 kbit/s oder 8 kbit/s möglich. Dies ist veranschaulicht in Figur 4. Die Pfeile sollen zum Ausdruck bringen, dass bei dem erfindungsgemäßen Verfahren alle Zeitschlitze, d. h. alle Übertragungskanäle und Subübertragungskanäle auf allen angeschlossenen PCM-Leitungen fortwährend gescannt werden (Wrap Around). Wenn bekannt ist, dass der Hersteller der jeweiligen BSS ein bestimmtes Zeitschlitzformat verwendet, kann der Scanprozess auf Zeitschlitze mit der entsprechenden Bandbreite beschränkt werden. Für jeden Zeitschlitz ist ein Eintrag in der jeweiligen Zuordnungstabelle vorhanden. Das erfindungsgemäße Verfahren hat nun die Aufgabe, zu jedem Zeitschlitz den mindestens einen Parameter herauszufinden, der auf dem Übertragungskanal für Steuerungsebenendaten übertragen wird, wenn der jeweilige Zeitschlitz aktiviert oder deaktiviert werden soll.

Figur 5 zeigt die Vorgehensweise bei der Aktivierung und Deaktivierung eines Zeitschlitzes, im Nachfolgenden ohne Einschränkung mit Bezug auf die Bandbreite mit Übertragungskanal bezeichnet, zwischen einer BTS und einem BSC. In der Darstellung von Figur 5 sind Übertragungen, die über den einen Übertragungskanal vorgenommen werden, auf dem Steuerungsebenendaten übertragen werden, mit RSL (Radio Signaling Link) gekennzeichnet, während Übertragungen auf einem Übertragungskanal für Benutzerebenendaten mit USER gekennzeichnet sind. Zunächst befindet sich mindestens ein Übertragungskanal im IDLE-Modus, d. h. im Leerlaufbetrieb. Dies ist in einfacher Weise daran zu erkennen, dass ein festes Muster übertragen wird, beispielsweise lauter Einsen oder abwechselnd eine Null und eine Eins (Schritt 100). Im Schritt 110 signalisiert der BTS, dass eine Benutzerebenenverbindung aufgebaut werden soll und beantragt beim BSC mindestens einen Übertragungskanal für Benutzerebenendaten. Im Schritt 120 übermittelt der BSC die Freigabe für eine Aktivierung eines Übertragungskanals und übermittelt hierbei auch den mindestens einen Parameter, der Informationen zu dem mindestens einen Übertragungskanal enthält. Im Schritt 130 quittiert der BTS die im Schritt 120 übertragene Mitteilung. Im Schritt 140 geht mindestens ein Übertragungskanal für Benutzerebenendaten in den aktivierten Zustand über. Der Zustandswechsel ist daran erkennbar, dass nunmehr anstelle des Leerlaufbetriebssignals, siehe Schritt 100, eine andere Bitfolge übertragen wird. Ausgehend vom Leerlaufbetrieb wird zunächst ein Zeitabgleich vorgenommen, um den BSC mit der Luftschnittstelle zu synchronisieren. Dies beansprucht, empirisch ermittelt, zwischen 80 ms und 1000 ms. Im Schritt 150, d. h. nach dem Zeitabgleich, ist der Übertragungskanal für die Übertragung von Benutzerebenendaten synchronisiert und überträgt kontinuierlich Synchronisierungsrahmen oder Datenrahmen, vergleiche auch die Schritte 160 und 170. Im Schritt 180 legt einer der beiden Teilnehmer an der mobilen Kommunikation auf. Auf dem Übertragungskanal für Steuerungsebenendaten wird ein Signal übertragen, das eine Kanalfreigabe anzeigt. Im vorliegenden Fall wird die Kanalfreigabe vom BSC an die BTS gesendet. Die BTS quittiert im Schritt 190 diese Kanalfreigabe. Anschließend geht im Schritt 200 der Übertragungskanal für Benutzerebenendaten wieder in den Leerlaufbetrieb über.

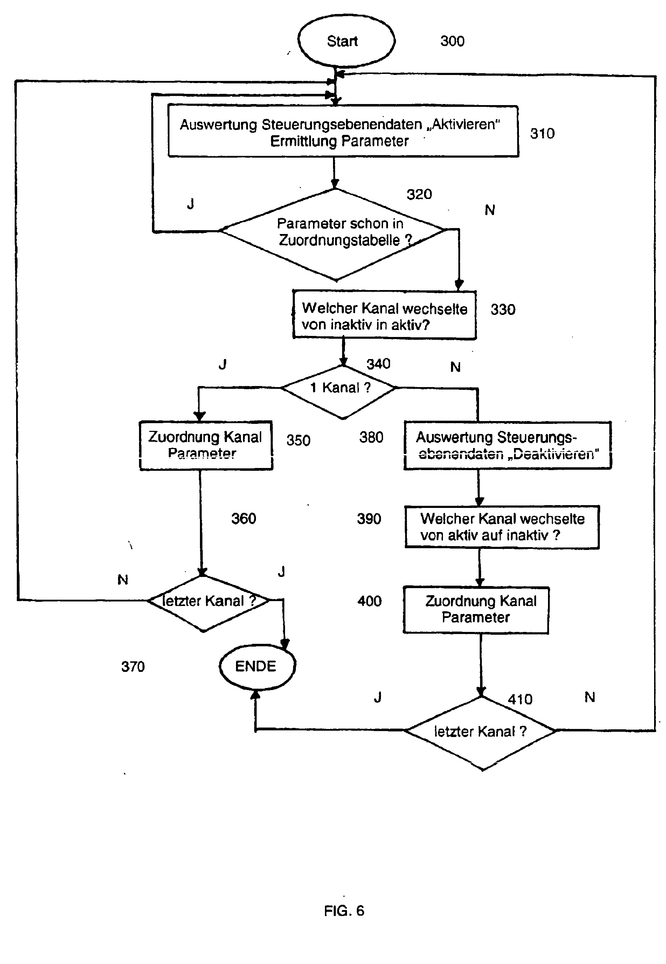

Gemäß Figur 6 beginnt das erfindungsgemäße Verfahren im Schritt 300. Im Schritt 310 werden die Steuerungsebenendaten ausgewertet, um festzustellen, dass eine Benutzerebenenverbindung, die mindestens einen Übertragungskanal für Benutzerebenendaten umfasst, aktiviert werden soll. Gleichzeitig wird der zugehörige mindestens eine Parameter ermittelt. Im Schritt 320 wird geprüft, ob der Parameter bereits in der Zuordnungstabelle erfasst ist. Falls dies der Fall ist, zweigt das Verfahren zum Schritt 310 zurück. Falls dies nicht der Fall ist, wird anschließend im Schritt 330 festgestellt, welcher Übertragungskanal für Benutzerebenendaten innerhalb eines vorgebbaren Zeitraums seinen Zustand von inaktiv in aktiv gewechselt hat. Wird im Schritt 340 festgestellt, dass nur ein einziger Übertragungskanal seinen Zustand von inaktiv in aktiv gewechselt hat, d. h. dass nur ein Übertragungskanal den Leerlaufbetrieb verlassen hat, wird der in Schritt 310 ermittelte Parameter diesem einen Übertragungskanal im Schritt 350 zugeordnet. Im Schritt 360 wird geprüft, ob dies der letzte Übertragungskanal war, dem noch kein Parameter zugeordnet wurde. Falls dies nicht der Fall ist, zweigt das Verfahren zu Schritt 310 zurück. War dies jedoch der letzte Kanal, wird das Verfahren in Schritt 370 beendet. Wird in Schritt 340 festgestellt, dass innerhalb des vorgebbaren Zeitraums mehrere Kanäle ihren Zustand von inaktiv in aktiv gewechselt haben, so werden im Schritt 380 die Steuerungsebenendaten ausgewertet, um festzustellen, dass eine Benutzerebenenverbindung deaktiviert werden soll. Im Schritt 390 wird festgestellt, welcher mindestens eine Übertragungskanal der Übertragungskanäle, die innerhalb des vorgebbaren Zeitraums, siehe Schritt 330, ihren Zustand von inaktiv in aktiv gewechselt hatten, innerhalb eines vorgebbaren Zeitraums seinen Zustand von aktiv in inaktiv wechselt. Im Schritt 400 wird der in Schritt 310 ermittelte Parameter dem Übertragungskanal zugeordnet, der innerhalb des vorgebbaren Zeitraums seinen Zustand von aktiv in inaktiv gewechselt hat, siehe Schritt 390. Im Schritt 410 wird wiederum geprüft, ob dies der letzte Übertragungskanal war, dem noch kein Parameter zugeordnet wurde. Falls ja, wird das Verfahren im Schritt 370 beendet, andernfalls zweigt das Verfahren zum Schritt 310 zurück.

Folgendes ist anzumerken: Da die tatsächlich über einen Übertragungskanal für Benutzerebenendaten übertragenen Daten für den Aufbau der Zuordnungstabelle unrelevant sind, können die Daten, die in den Schritten 150 bis 170 übertragen werden, siehe Figur 5, verworfen werden. Dies führt dazu, dass nur eine überschaubare Anzahl von Daten gespeichert und ausgewertet werden braucht, um das erfindungsgemäße Verfahren durchzuführen. Im Ergebnis führt dies dazu, dass das erfindungsgemäße Verfahren in Echtzeit realisierbar ist. Der Zeitraum zwischen Übermittlung des Parameters auf dem Übertragungskanal für Steuerungsebenendaten und zugehöriger Zustandswechsel eines Übertragungskanals beträgt 20 ms bis 500 ms, bevorzugt 20 ms bis 100 ms. Zur Ermittlung des mindestens einen Parameters wird die auf dem Übertragungskanal für Steuerungsebenendaten übertragene Information fortlaufend vollständig dekodiert. Bei einem Zustandswechsel werden bevorzugt abgespeichert der betroffene Zeitschlitz, der zugeordnete Zeitstempel sowie die Art des Zustandswechsels, d. h. von aktiv in inaktiv oder umgekehrt.

## Patentansprüche

1. Verfahren zum Monitoren einer zwischen einem ersten (BTS) und einem zweiten (BSC) Knoten eines Übertragungssystems angeordneten Schnittstelle (A-bis),
wobei die Schnittstelle (Abis) mit mindestens einer zwischen dem ersten (BTS) und dem zweiten (BSC) Knoten angeordneten Übertragungsstrecke verbunden ist,
wobei auf der mindestens einen Übertragungsstrecke mehrere Übertragungskanäle eingerichtet sind,
wobei auf mindestens einem der Übertragungskanäle Benutzerebenendaten übertragen werden;
und wobei über mindestens einen der Übertragungskanäle Steuerungsebenendaten übertragen werden, die mindestens einen Parameter umfassen, der mindestens einem Übertragungskanal, auf dem Benutzerebenendaten übertragen werden, zugeordnet ist, und dieser Übertragungskanal, auf dem Steuerungsebenendaten übertragen werden, bekannt ist;
folgende Schritte umfassend:
a) Auswerten der Steuerungsebenendaten zur Feststellung, dass eine Benutzerebenenverbindung, die mindestens einen Übertragungskanal für Benutzerebenendaten umfasst, aktiviert werden soll und Ermitteln des zugehörigen mindestens einen Parameters (Schritt 310); **gekennzeichnet durch**:
b) Feststellen, welcher mindestens eine Übertragungskanal für Benutzerebenendaten innerhalb eines vorgebbaren Zeitraums seinen Zustand von inaktiv in aktiv wechselt (Schritt 330); und
c) Ermitteln der Zuordnung des mindestens einen Parameters zu dem mindestens einen Übertragungskanal für Benutzerebenendaten (Schritt 350).

2. Verfahren nach Anspruch 1,
**gekennzeichnet durch** folgende weitere Schritte:
falls in Schritt b) gleichzeitig mehrere Übertragungskanäle innerhalb des vorgebbaren Zeitraums ihren Zustand von inaktiv in aktiv wechseln:
d1) Auswerten der Steuerungsebenendaten zur Feststellung, dass eine Benutzerebenenverbindung deaktiviert werden soll (Schritt 380);
d2) Feststellen, welcher mindestens eine Übertragungskanal der Übertragungskanäle, die innerhalb des vorgebbaren Zeitraums ihren Zustand von inaktiv in aktiv gewechselt hatten, innerhalb eines vorgebbaren Zeitraums seinen Zustand von aktiv in inaktiv wechselt (Schritt 390); und
d3) Ermitteln der Zuordnung des mindestens einen Parameters zu dem mindestens einen Übertragungskanal, der innerhalb des vorgebbaren Zeitraums seinen Zustand von aktiv in inaktiv gewechselt hat (Schritt 400).

3. Verfahren nach einem der vorhergehenden Ansprüche,
**gekennzeichnet durch** folgenden weiteren Schritt:
- Eintragen des mindestens einen Parameters und des mindestens einen Übertragungskanals in eine Zuordnungstabelle, insbesondere in einer Speichervorrichtung.

4. Verfahren nach Anspruch 3,
**dadurch gekennzeichnet,**
**dass** nach Durchführung von Schritt a) geprüft wird, ob der Parameter bereits in der Zuordnungstabelle eingetragen ist und das Verfahren nur für die Parameter ausgeführt wird, die noch nicht in der Zuordnungstabelle erfasst sind (Schritt 320).

5. Verfahren nach einem der vorhergehenden Ansprüche,
**dadurch gekennzeichnet,**
**dass** der erste Knoten (BTS) eine Base Station (BTS) und der zweite Knoten (BSC) ein Base Station Controller (BSC) ist.

6. Verfahren nach einem der vorhergehenden Ansprüche,
**dadurch gekennzeichnet,**
**dass** der erste (BTS) und der zweite (BSC) Knoten über eine bis vier PCM-Übertragungsstrecken (E1/T1) miteinander verbunden sind.

7. Verfahren nach einem der vorhergehenden Ansprüche,
**dadurch gekennzeichnet,**
**dass** der mindestens eine Parameter eine Auswahl der folgenden Information umfasst:
- Lage des Übertragungskanals;
- Bandbreite;
- Lage des Subübertragungskanals.

8. Verfahren nach einem der vorhergehenden Ansprüche,
**dadurch gekennzeichnet,**
**dass** bekannt ist, ob der mindestens eine Parameter mehrere Einzelparameter umfasst oder ob mehrere Einzelinformationen in den mindestens einen Parameter zusammengefasst sind.

9. Verfahren nach einem der vorhergehenden Ansprüche,
**dadurch gekennzeichnet,**
**dass** vor der Durchführung von Schritt b) die Daten, die auf der mindestens einen Übertragungsstrecke übertragen werden, in Übertragungskanäle mit der kleinsten, zwischen dem ersten (BTS) und dem zweiten (BSC) Knoten zur Übertragung verwendeten Bandbreite aufgeteilt werden.

10. Vorrichtung zum Monitoren einer zwischen einem ersten (BTS) und einem zweiten (BSC) Knoten eines Übertragungssystems angeordneten Schnittstelle (A-bis),
wobei die Schnittstelle (Abis) mit mindestens einer zwischen dem ersten (BTS) und dem zweiten (BSC) Knoten angeordneten Übertragungsstrecke verbunden ist,
wobei auf der mindestens einen Übertragungsstrecke mehrere Übertragungskanäle eingerichtet sind,
wobei auf mindestens einem der Übertragungskanäle Benutzerebenendaten übertragbar sind;
und wobei über mindestens einen der Übertragungskanäle Steuerungsebenendaten übertragbar sind, die mindestens einen Parameter umfassen, der mindestens einem Übertragungskanal, auf dem Benutzerebenendaten übertragbar sind, zugeordnet ist, und dieser Übertragungskanal, auf dem Steuerungsebenendaten übertragbar sind, bekannt ist;
umfassend:
- eine Vorrichtung zum Auswerten der Steuerungsebenendaten, die ausgelegt ist zur Feststellung, dass eine Benutzerebenenverbindung, die mindestens einen Übertragungskanal für Benutzerebenendaten umfasst, aktiviert werden soll und zum Ermitteln des zugehörigen mindestens einen Parameters; **gekennzeichnet durch**:
- eine Vorrichtung zum Feststellen, welcher mindestens eine Übertragungskanal für Benutzerebenendaten innerhalb eines vorgebbaren Zeitraums seinen Zustand von inaktiv in aktiv wechselt; und
- eine Vorrichtung zum Ermitteln der Zuordnung des mindestens einen Parameters zu dem mindestens einen Übertragungskanal für Benutzerebenendaten.

## Claims

1. Method for monitoring an interface (Abis) disposed between a first (BTS) and a second (BSC) node of a transmission system, wherein the interface (Abis) is connected to at least one link disposed between the first (BTS) and the second (BSC) node,
wherein plural transmission channels are established on the at least one link;
wherein user plane data is transmitted on at least one of the transmission channels;
and wherein control plane data is transmitted over at least one of the transmission channels, which includes at least one parameter being allocated to at least one transmission channel, on which user plane data are transmitted, and this transmission channel for control plane data is known;
comprising the following steps:
a) evaluating the control plane data for determining that a user plane connection including at least one transmission channel for user plane data is to be activated, and determining the associated at least one parameter (step 310); **characterized by**
b) determining, which at least one transmission channel for user plane data changes its state from inactive to active within a presettable period of time (step 330); and
c) determining the allocation of the at least one parameter to the at least one transmission channel for user plane data (step 350).

2. Method according to claim 1,
**characterized by** the following further steps:
if in step b) plural transmission channels change their state from inactive to active at the same time within the presettable period of time:
d1) evaluating the control plane data for determining that a user plane connection is to be deactivated (step 380);
d2) determining, which at least one transmission channel of the transmission channels, which had changed their state from inactive to active within the presettable period of time, changes its state from active to inactive within a presettable period of time (step 390); and
d3) determining the allocation of the at least one parameter to the at least one transmission channel, which has changed its state from active to inactive within the presettable period of time (step 400).

3. Method according to any one of the preceding claims,
**characterized by** the following further step:
- entering the at least one parameter and the at least one transmission channel in an allocation table, especially in a storage device.

4. Method according to claim 3,
**characterized in that**
after performing step a), it is checked if the parameter is already entered in the allocation table, and the method is only performed for the parameters, which are not yet acquired in the allocation table (step 320).

5. Method according to any one of the preceding claims,
**characterized in that**
the first node (BTS) is a base station (BTS) and the second node (BSC) is a base station controller (BSC).

6. Method according to any one of the preceding claims,
**characterized in that**
the first (BTS) and the second (BSC) node are connected to each other through one to four PCM links (E1/T1).

7. Method according to any one of the preceding claims,
**characterized in that**
the at least one parameter includes a selection of the following information:
- location of the transmission channel;
- bandwidth;
- location of the transmission sub-channel.

8. Method according to any one of the preceding claims,
**characterized in that**
it is known whether the at least one parameter includes plural single parameters or whether plural single information is combined in the at least one parameter.

9. Method according to any one of the preceding claims,
**characterized in that**
prior to performing step b), the data transmitted on the at least one link is divided in transmission channels with the smallest bandwidth used between the first (BTS) and the second (BSC) node for transmission.

10. Apparatus for monitoring an interface (Abis) disposed between a first (BTS) and a second (BSC) node of a transmission system,
wherein the interface (Abis) is connected to at least one link disposed between the first (BTS) and the second (BSC) node,
wherein plural transmission channels are established on the at least one link,
wherein user plane data is transmittable on at least one of the transmission channels;
and wherein control plane data including at least one parameter which is allocated to at least one transmission channel, on which user plane data is transmittable, is transmittable over at least one of the transmission channels, and this transmission channel for control plane data is known;
including:
- a device for evaluating the control plane data, which is configured to determine that a user plane connection including at least one transmission channel for user plane data, is to be activated, and to determine the associated at least one parameter; **characterized by**
- a device for determining, which at least one transmission channel for user plane data changes its state from inactive to active within a presettable period of time; and
- a device for determining the allocation of the at least one parameter to the at least one transmission channel for user plane data.

## Revendications

1. Procédé de surveillance d'une interface (Abis) disposée entre un premier noeud (BTS) et un deuxième noeud (BSC) d'un système de transmission, l'interface (Abis) étant reliée à au moins un trajet de transmission disposé entre le premier noeud (BTS) et le deuxième noeud (BSC),
dans lequel plusieurs canaux de transmission sont établis dans ledit au moins un trajet de transmission,
dans lequel des données de niveau utilisateur sont transmises par au moins l'un des canaux de transmission;
et dans lequel des données de niveau commande sont transmises par au moins l'un des canaux de transmission, qui comprennent au moins un paramètre, affecté à au moins un canal de transmission par lequel des données de niveau utilisateur sont transmises, et dans lequel ce canal de transmission par lequel des données de niveau commande sont transmises est connu;
comprenant l'étape suivante:
a) exploitation des données de niveau commande pour déterminer qu'une liaison de niveau utilisateur, qui comprend au moins un canal de transmission pour des données de niveau utilisateur, doit être activée et acquisition dudit au moins un paramètre (étape 310) correspondant;
**caractérisé par**:
b) la détermination de celui des au moins un dit canal de transmission pour données de niveau utilisateur qui fait passer au sein d'une durée prescriptible son état d'inactif à actif (étape 330); et
c) l'acquisition de l'affectation dudit au moins un paramètre au dit au moins un canal de transmission pour données de niveau utilisateur (étape 350).

2. Procédé selon la revendication 1,
**caractérisé par** les autres étapes suivantes:
si au cours de l'étape b) plusieurs canaux de transmission font passer simultanément au sein de la durée prescriptible leur état d'inactif à actif:
d1) exploitation des données de niveau commande pour déterminer qu'une liaison de niveau utilisateur doit être désactivée (étape 380);
d2) détermination de celui des au moins un dits canaux de transmission qui avaient fait passer au sein de la durée prescriptible leur état d'inactif à actif, qui fait passer au sein d'une durée prescriptible son état d'actif à inactif (étape 390); et
d3) acquisition de l'affectation dudit au moins un paramètre au dit au moins un canal de transmission qui, au sein de la durée prescriptible a fait passer son état d'actif à inactif (étape 400).

3. Procédé selon l'une quelconque des revendications précédentes,
**caractérisé par** l'autre étape suivante:
- inscription dudit au moins un paramètre et dudit au moins un canal de transmission dans une table d'affectation, en particulier dans un dispositif de stockage.

4. Procédé selon la revendication 3,
**caractérisé en ce que**,
après exécution de l'étape a), il est vérifié si le paramètre est déjà inscrit dans la table d'affectation et que le procédé n'est exécuté que pour ceux des paramètres qui ne sont pas encore saisis dans la table d'affectation (étape 320).

5. Procédé selon l'une quelconque des revendications précédentes,
**caractérisé en ce que**,
le premier noeud (BTS) est une station de base (BTS) et le deuxième noeud (BSC) est un contrôleur de station de base (BSC).

6. Procédé selon l'une quelconque des revendications précédentes,
**caractérisé en ce que**,
le premier noeud (BTS) et le deuxième noeud (BSC) sont reliés ensemble par un à quatre trajets de transmission PCM (E1/T1).

7. Procédé selon l'une quelconque des revendications précédentes,
**caractérisé en ce que**,
ledit au moins un paramètre comprend une sélection des informations suivantes:
- position du canal de transmission;
- bande passante;
- position du canal de sous-transmission.

8. Procédé selon l'une quelconque des revendications précédentes,
**caractérisé en ce que**
il est connu si ledit au moins un paramètre comprend plusieurs paramètres isolés ou si plusieurs informations isolées sont regroupées dans ledit au moins un paramètre.

9. Procédé selon l'une quelconque des revendications précédentes,
**caractérisé en ce que**,
avant exécution de l'étape b), les données qui sont transmises par ledit au moins un trajet de transmission sont réparties dans des canaux de transmission avec la plus petite bande passante utilisée pour la transmission entre le premier noeud (BTS) et le deuxième noeud (BSC).

10. Dispositif de surveillance d'une interface (Abis) disposée entre un premier noeud (BTS) et un deuxième noeud (BSC) d'un système de transmission,
dans lequel l'interface (Abis) est reliée à au moins un trajet de transmission disposé entre le premier noeud (BTS) et le deuxième noeud (BSC),
dans lequel plusieurs canaux de transmission sont établis dans ledit au moins un trajet de transmission,
dans lequel des données de niveau utilisateur peuvent être transmises par au moins l'un des canaux de transmission;
et dans lequel des données de niveau de commande peuvent être transmises par au moins l'un des canaux de transmission, qui comprennent au moins un paramètre, affecté à au moins un canal de transmission par lequel des données de niveau utilisateur peuvent être transmises, et que ce canal de transmission par lequel des données de niveau commande peuvent être transmises est connu; comprenant:
- un dispositif pour exploiter les données de niveau commande conçu pour déterminer qu'une liaison de niveau utilisateur, qui comprend au moins un canal de transmission pour des données de niveau utilisateur, doit être activée et pour acquérir ledit au moins un paramètre correspondant; **caractérisé par**:
- un dispositif pour la détermination de celui des au moins un dit canal de transmission pour données de niveau utilisateur qui fait passer au sein d'une durée prescriptible son état d'inactif à actif et
- un dispositif pour l'acquisition de l'affectation dudit au moins un paramètre au dit au moins un canal de transmission pour données de niveau utilisateur.
